# EUROPÄISCHE PATENTSCHRIFT

(11) **EP 0 864 409 B1**
(45) Veröffentlichungstag und Bekanntmachung des Hinweises auf die Patenterteilung: **12.06.2002**
(21) Anmeldenummer: 98104086.8
(22) Anmeldetag: 07.03.1998
(51) Int. Cl.: B29B 13/06

(54) **Vorrichtung zur Kristallisation von Polymergranulaten sowie Verfahren zur Kristallisation von Polymergranulaten**
Apparatus and process for crystallizing polymer granulate
Procédé et appareil de cristallisation de granules polymères

(30) Priorität: 10.03.1997 DE 19709517
(43) Veröffentlichungstag der Anmeldung: 16.09.1998
(73) Patentinhaber: TREVIRA GMBH, 60528 Frankfurt am Main (DE)
(72) Erfinder: Leikam, Helmut, DI., 86399 Bobingen (DE)
(74) Vertreter: Luderschmidt, Schüler & Partner GbR

(56) Entgegenhaltungen:
- DE-A- 1 454 843
- GB-A- 2 049 899
- US-A- 3 112 188
- US-A- 4 092 784
- US-A- 4 120 849
- US-A- 4 231 991
- US-A- 4 276 261
- US-A- 5 052 123
- US-A- 5 090 134
- US-A- 5 597 852

## Beschreibung

Die vorliegende Erfindung betrifft eine Kristallisier-Vorrichtung für Polymergranulate sowie ein Verfahren zur Kristallisation von Polymergranulaten.

Es ist bekannt, daß manche Polymergranulate vor dem Trocknen und/oder einer Feststoffkondensation kristallisiert werden, um eine Agglomeratbildung zu vermeiden. Insbesondere amorphe Polyestergranulate neigen zum Verkleben, so daß große Schwierigkeiten bei der Temperaturführung und beim Austrag aus der Kristallisier-Vorrichtung resultieren.

Im Stand der Technik sind eine Reihe von Vorrichtungen zur Kristallisation von Polymergranulaten bekannt. So beschreiben DD-PS-0, 150,932; DD-PS-0, 147,716 sowie DE-A-3,213,025 Vorrichtungen zur Kristallisation von Polymergranulaten bei denen die Agglomerat-Bildung durch Rührelemente verhindert wird. Diese mechanischen Rührelemente führen zu einer Belastung des Granulats und zu einer vermehrten Staubbildung.

Weitere Vorrichtungen zur Kristallisation von Polymergranulaten bei denen auf ein mechanisches Rührelement verzichtet werden kann, sind aus FR-A-1,478,224; WO 89/11073 sowie DE-A195 00 383 bekannt.

So beschreibt FR-A-1,478,224 eine Vorrichtung, bei der das amorphe Polymergranulat über einen Produktverteiler in einen Kristallisierer eingefüllt wird, dessen Bodenplatte Bohrungen aufweist. Durch diese Bohrungen wird ein gasförmiges Medium in die Schüttung eingeleitet und durchdringt diese. Dem Kristallisierer nachgeschaltet ist ein Trockner. Bedingt durch die Konstruktion ist eine bauliche Trennung der Kristallisation und Trocknung unvermeidbar.

Aus WO 89/11073 ist eine zweistufige Vorrichtung zum Kristallisieren und Trocknen amorpher Polymergranulate bekannt, die in einer Apparatur untergebracht ist. Die erste Stufe (Kristallisierer) ist von ihrem Aufbau sehr komplex und erfordert viele aufwendige und teils bewegliche Bauteile, insbesondere die Belüftungsfläche ist von einer derartigen Konstruktion, so daß der Polymergranulat-Durchsatz nicht ohne weiteres variabel ist, da die Verweilzeit des Granulats auf der Belüftungsfläche durch die Konstruktion bedingt wird.

Aus DE-A-195 00 383 ist eine Vorrichtung zur kontinuierlich Kristallisation von Polyestergranulaten bekannt. Auch hier wird das wärmeübertragende, gasförmige Medium durch einen Siebboden in die Granulat-Schüttung eingeleitet, so daß auch hier eine konstruktive Trennung zwischen Kristallisierer und Trockner vorliegt.

In der US-5 597 852 wird ein Verfahren und eine Apparatur zum Recyceln von Polyethylenterephthalat-Abfällen beschrieben. Bei diesen Abfällen kann es sich auch um Polyestervliesmaterial handeln.

Beim Recyceln wird das Polyestermaterial mit einer zweiten Komponente, nämlich der sog. "polyester primary component" gemischt. Die dazu verwendete Apparatur ist mit Rührwerkzeugen versehen. Während der Behandlung wird das Material aufgeteilt und zerkleinert. Das dort beschriebene Verfahren und die dort eingesetzte Apparatur unterscheidet sich u. a. vom Gegenstand der Erfindung dadurch, daß eine mechanische Behandlung des Guts mittels eines Rührwerkzeuges vorgenommen wird, was gemäß der Erfindung nicht der Fall ist. Ferner fehlt jeglicher Hinweis auf die Zudosierung eines periodisch einwirkenden gasförmigen Mediums.

In der GB 2 049 899 A wird ein Verfahren und eine Vorrichtung zum Trocknen von nassem Polyvinylchloridkuchen in einem Fließbetttrockner beschrieben.

Dazu wird durch eine am Boden der Vorrichtung angebrachte Verteilerplatte ein pulsierender Fluß eines trocknenden Gases zugeführt. Ferner werden an mehreren Stellen, d. h. auf drei Niveauebenen unter einem bestimmten Winkel pulsierende Strahlen von einem nicht benetzenden Gas eingespeist, um den Filterkuchen in einer siedeähnlichen Bewegung zu halten. Von einer Kristallisations- und von einer Trocknungszone ist keine Rede in diesem Dokument.

Es bestand daher ein Bedarf an einer Vorrichtung zum Trocknen von Polymergranulaten, die einen integrierten Kristallisierer enthält und deren konstruktiver Aufwand gering ist, so daß der Kristallisierer in bestehende Trockner eingebaut werden kann. Zusätzlich soll der Kristallisierer keine mechanisch bewegten Teile enthalten, die in Kontakt zu dem Polymergranulat stehen. Weiterhin soll die Konstruktion einen variablen Mengendurchsatz erlauben, ohne daß Umbaumaßnahmen erfolgen müssen.

Gegenstand der vorliegenden Erfindung ist daher eine Vorrichtung gemäß Anspruch 1.

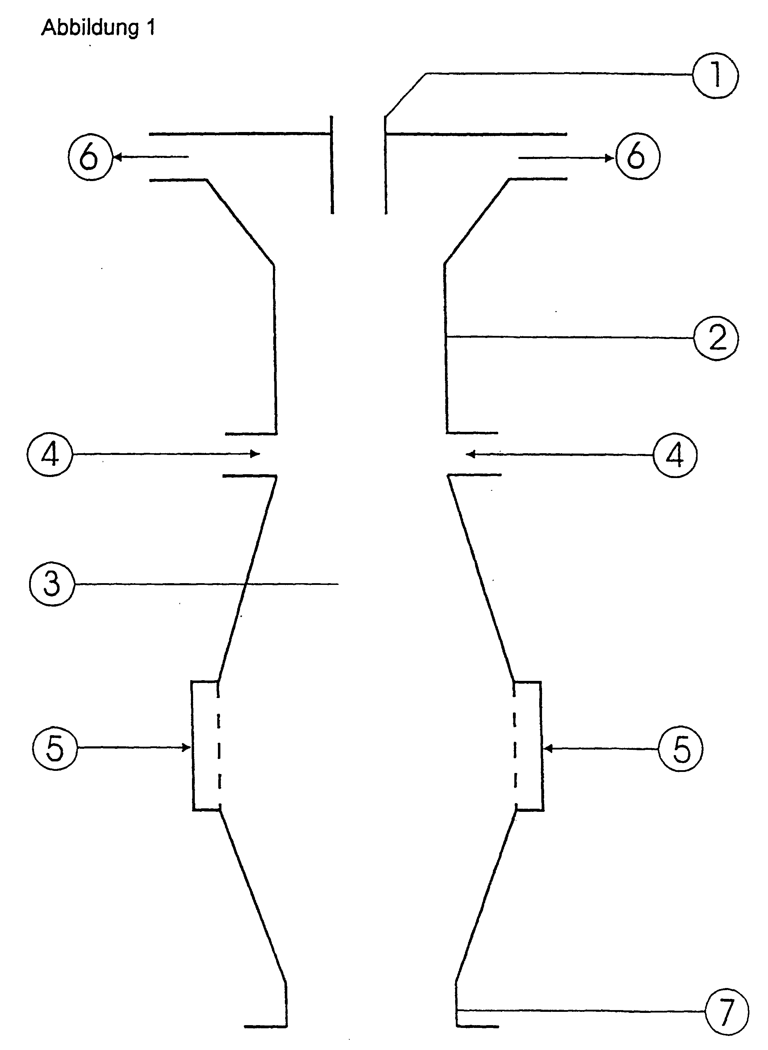

Die erfindungsgemäße Vorrichtung wird durch die Abbildung 1 erläutert.

Das Polymergranulat wird durch eine Eintrittsöffnung (1) für das Polymergranulat in die im wesentlichen senkrecht stehende Vorrichtung (2) eingefüllt und erfüllt im stationären Zustand den Behandlungsraum (3) bis zu einer Füllhöhe 500 mm oberhalb des (der) Gaseintrittsstutzen (4), auch als Sekundärgaszuführungen bezeichnet. Das über die Gaseintrittsstutzen (4) eingespeiste inerte, gasförmige Medium erwärmt zusammen mit dem über den Gaseintrittsstutzen (5) eingespeisten inerten gasförmigem Medium das Polymergranulat und bringt dieses zur Kristallisation. Die Agglomeratbildung wird dadurch verhindert, indem das über den Gaseintrittsstutzen (4) eingespeiste Medium in Form eines pulsierenden Inertgasstromes eingesetzt wird. Die eingespeisten Inertgasströme verlassen die Vorrichtung über die Auslässe (6) und können über Gasreinigungssystem und Wärmetauschersysteme gereinigt und temperiert wieder eingesetzt werden. Bedingt durch die Entnahme von getrocknetem und kristallisiertem Polymergranulat am Stutzen (7) bildet sich unterhalb des Gaseintrittsstutzen (4) eine sogenannte "Propfenströmung" aus. Diese besteht aus Polymergranulaten gleicher Feuchte und Schmelzviskosität. Das am Stutzen (7) austretende Polymergranulat kann direkt in einen Extruder überführt oder aber zwecks Zwischenlagerung ausgetragen werden. Die Trocknung des Polymergranulates erfolgt durch das über den Gaseintrittsstutzen (5) eingespeiste inerte gasförmige Medium.

Der Behandlungsraum (3) kann je nach Anforderung über die Außenwände gekühlt oder beheizt werden. Er kann zylindrisch oder konisch ausgebildet sein.

Über den Gaseintrittsstutzen (5) wird mit einem inerten Gas der Behandlungsraum (Trockner) gespült und freigesetzte flüchtige Bestandteile werden ausgetragen.

Als inertes Gas wird üblicherweise Luft und/oder Stickstoff eingesetzt, dessen Feuchtigkeit einem Taupunkt von -20°C oder darunter entspricht.

Über den Gaseintrittsstutzen (4) wird das inerte Gas in den Behandlungsraum eingebracht. Dies erfolgt in Form eines pulsierenden Gasstromes. Der pulsierende Gasstrom wirbelt die oberhalb des Gaseintrittsstutzen (4) befindliche Granulatschicht immer wieder auf und verhindert hierdurch das Verbacken bzw. das Verkleben. Der pulsierende Gasstrom hat eine Geschwindigkeit von über 3 m/s, bevorzugt bis zu 10 m/s die Pulsfrequenz liegt bei 10 - 60, bevorzugt 20 - 40 Gas-Pulsen pro Minute.

In einer bevorzugten Ausführungsform sind die Gaseintrittsstutzen (4) 100 - 400 mm, insbesondere 100 - 200 mm, unterhalb der Polymergranulat-Füllhöhe angebracht. Ein einer ebenfalls bevorzugten Ausführungsform reichen die Gaseintrittsstutzen (4) bis zu 2/3 vom Radius des Behandlungsraumes (3) in diesen hinein und ermöglichen eine optimale Wirkung.

Die Anzahl der Gaseintrittsstutzen (4) und (5) unterliegen keinerlei Einschränkung und werden nur durch die zum Teil vorgegebene Konstruktion der Vorrichtung limitiert.

Die Zufuhr an amorphem, feuchtem Polymergranulat erfolgt über eine an die Eintrittsöffnung für das Polymergranulat (1) angeschlossene Fördereinrichtung. Die Menge des zugeführten Granulats kann entweder durch Kontrolle des am Stutzen (7) entnommenen Materials bestimmt oder aber durch einen Füllstandsfühler, der in einem Bereich bis zu 500 mm oberhalb des Gaseintrittsstutzen (4) angebracht ist, erfolgen. Im Dauerbetrieb stellt sich so eine konstante Füllhöhe ein. Durch Veränderung der Entnahme- und/oder Zugabemengen kann die Füllhöhe verändert werden, so daß eine veränderte Prozessführung möglich ist.

Wesentlich an der erfindungsgemäßen Vorrichtung ist, daß die Eintrittsöffnung für das Polymergranulat (1) nicht in die oberhalb der Gaseintrittsstutzen (4) befindlich Polymergranulat-Schüttung eintaucht. Bevorzugt ist ein Abstand zwischen unterem Ende der Eintrittsöffnung für das Polymergranulat (1) und der Oberkante der Polymergranulat-Schüttung von mindestens 200 mm, insbesondere zwischen 200 und 1 000 mm.

Die erfindungsgemäße vereint somit einen Kristallisierer und einen Trockner sowie gegebenenfalls einen Feststoffkondensierer in einer Vorrichtung. Der Behandlungsraum (3) zwischen den Gaseintrittsstutzen (5) und (4) bildet den Trockner, während der Behandlungsraum (3) oberhalb der Gaseintrittsstutzen (4) den Kristallisierer ausbildet. Aufgrund des einfachen Aufbaus des Kristallisierers kann dieser leicht in bestehende Trockner eingebaut werden.

Die vorstehend beschriebene Vorrichtung ist zur Kristallisation, Trocknung und gegebenenfalls zur Feststoffkondensation von granulatförmigen Polymermaterialien geeignet. Bei diesen handelt es sich insbesondere um granulatförmige Polyester.

Als einzusetzende Polyestermaterialien kommen im Prinzip alle bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure, sowie Naphthalindicarbonsäuren; gängige Diole haben 2 bis 4 C-Atome, wobei das Ethylenglycol besonders geeignet ist. Besonders vorteilhaft sind Granulate, die aus einem Polyestermaterial bestehen, das zu mindestens 85 mol.-% aus Polyethylenterephthalat besteht.

Die restlichen 15 mil.-% bauen sich dann aus Dicarbonsäureeinheiten und Glycoleinheiten auf, die als sogenannte Modifizierungsmittel wirken und die es dem Fachmann gestatten, die physikalischen und chemischen Eigenschaften gezielt zu beeinflussen.

Beispiele für solche Dicarbonsäureeinheiten sind Reste der Isophthalsäure oder von aliphatischen Dicarbonsäuren wie z. B. Glutarsäure, Adipinsäure, Sebazinsäure; Beispiele für modifizierend wirkende Diolreste sind solche von längerkettigen Diolen, z. B. von Propandiol oder Butandiol, von Di- oder Triethylenglykol oder, sofern in geringer Menge vorhanden, von Polyglycol mit einem Molgewicht von ca. 500 bis 2 000.

Besonders bevorzugt sind Polyester, die mindestens 95 mol.-% Polyethylenterephthalat enthalten, insbesondere solche aus unmodifiziertem Polyethylenterephthalat.

Weiterer Gegenstand der vorliegenden Erfindung ist ein Verfahren gemäß Anspruch 7.

Die in Maßnahme B) erwähnte Kristallisation erfolgt üblicherweise bei Temperaturen unterhalb 180°C, vorzugsweise von 120 - 180°C.

Die Trocknung gemäß Maßnahme C) erfolgt üblicherweise bei Temperaturen zwischen 140 und 180°C, in einem Inertgasstrom. Die Trocknung erfolgt durch einen im Gegenstrom geführten erwärmten inerten Gasstrom. Hierdurch werden die Granulatteilchen auf die zur Trocknung notwendige Temperatur erwärmt, sowie entstehende nicht erwünschte Nebenprodukte aus dem Reaktor ausgetragen. Das Auftragen der feststoffkondensierten Granulatteilchen erfolgt mittels an sich bekannter Austragsvorrichtung, wodurch sich ein kontinuierlicher schwerkraftbedingter Produktstrom einstellt.

Die Restfeuchte des kristallisierten und getrockneten Polymergranulates beträgt 20 ppm Wasser.

Die Trocknung des Polymergranulates ist innerhalb mehrerer Stunden abgeschlossen. In Abhängigkeit von Temperatur und Durchsatzmenge dauert die Trocknung bis zu 6 Stunden (Verweilzeit im Trocknerbereich). Die Kristallisationsdauer beträgt - ebenfalls in Abhängigkeit von Temperatur und Durchsatzmenge - mindestens 20 Minuten (Verweilzeit im Kristallisationsbereich).

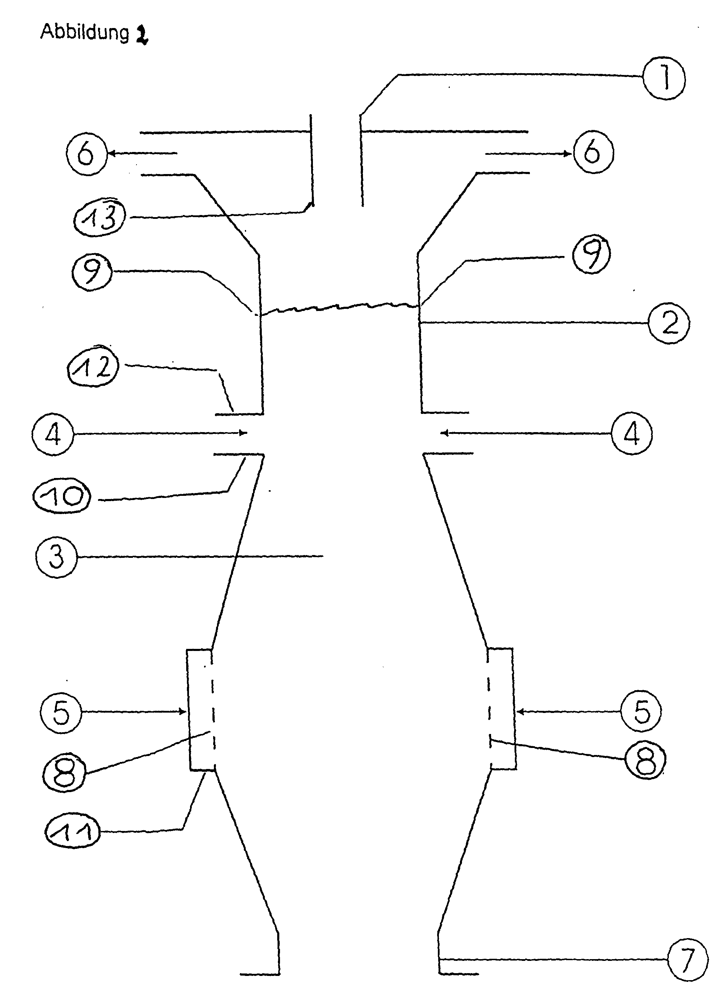

Nachfolgend wird die Erfindung anhand eines Beispiels unter Verweis auf die ebenfalls beigefügte Abbildung 2 weiter erläutert.

In der Abbildung 2 bezeichnet die Ziffer 9 den Füllstand einer Polyestergranulatschüttung innerhalb des Pulsbett-Rohrtrockners. Das Bezugszeichen 10 dient zur Verdeutlichung der Unterkante der Öffnung für die Sekundärluft/Pulsluft. Die Ziffer 8 bezieht sich auf den Gaseintrittsstutzen 5, insbesondere auf die gestrichelt dargestellten Linien, welche die Verlängerung der Rohrtrocknerwand, also einer gedachten Linie, darstellt. Die Ziffer 11 meint die Unterkante des Gaseintrittsstutzen 5 für die Zufuhr der Primärluft.

Ein Pulsbett-Rohrtrockner für einen Durchsatz von etwa 180 kg/h Polyester-Granulat (mit einem mittleren Granulat-Durchmesser von etwa 2,5 x 4 mm) hat einen doppelkonischen Mantel mit einem größten Durchmesser von 800 mm. Der größte Durchmesser von 800 mm wird zwischen den gedachten Linien 8 gemessen. Die von der Primärluft durchblasene Füllgutstrecke, das ist der Abstand von 11 bis 9, beträgt etwa 2 700 mm. Etwa 150 mm von der gesamten Füllgutstrecke von 2 700 mm werden pulsiert. Es handelt sich bei den 150 mm pulsierter Füllgutstrecke um den Abstand von 9 bis 12. Die Sekundärluftgeschwindigkeit beim Pulsieren beträgt etwa 4,7 m/s, wobei die Frequenz von 22 ¹/min aufrechterhalten wird. Die Temperatur der Pulsluft, deren Taupunkt ebenfalls weniger als -25°C beträgt, strömt mit einer Temperatur von 165°C und einer Menge von 360 m³/h ein. Der Abstand von höchstem Füllstand 9 zu der Kante 13 beträgt etwa 300 mm, während der Durchmesser des Rohrtrockners bei 2 etwa 700 mm beträgt.

Im Ergebnis ist festzustellen, daß bei einer vorgenommenen Trocknung und Kristallisierung gemäß den hierin beschriebenen im Beispiel genannten Parametern das Granulat außerordentlich schonend getrocknet wird. Darauf weisen die Lage in °C und die Wärmetönung in J/g der Temperpeaks bei DSC-Messungen hin, die an einzelne Chips nach der Trocknung gemessen wurden. Die absoluten Werte der Lage bewegten sich bei einem Mittelwert von 172 °C in einem Band von ± 1,5°C. Die getrockneten Schnitzel sind geometrisch unbeschädigt, Verklebungen zu Mehrlingen wurden nicht gefunden.

## Patentansprüche

1. Vorrichtung zum Kristallisieren und Trocknen sowie gegebenenfalls Feststoffkondensieren von Polymergranulaten aus einem gehäuseförmigen Mantel (2), in dem ein im wesentlichen senkrecht stehender Behandlungsraum (3) gebildet ist, mit Gaseintrittsstutzen (4), (5) und Gasaustrittsstutzen (6), einer Eintrittsöffnung für das Polymergranulat (1), die nicht in die Polymergranulat-Schüttung hineinreicht, und einer Austrittsöffnung (7) für das Polymergranulat, **dadurch gekennzeichnet, daß** der Behandlungsraum einen gemeinsamen, baulich nicht getrennten Raum für die Kristallisation und für die Trocknung aufweist, wobei Gaseintrittsstutzen (4) zum Behandeln des Polymergranulatschüttgutes im stationären Zustand angebracht sind, die Mittel zum Verursachen einer periodisch einwirkenden Störung des Schüttgutes durch ein inertes, gasförmiges Medium aufweisen, der Abstand zwischen unterem Ende der Eintrittsöffnung (1) und der Oberkante der Polymergranulatschüttung 200 bis 1 000 mm beträgt und der Abstand zwischen unterem Ende der Eilltrittsöffnung (1) und Gaseintrittsstutzen (4) 300 bis 1 500 mm beträgt.

2. Vorrichtung gemäß Anspruch 1, **dadurch gekennzeichnet, daß** der Behandlungsraum (3) zylindrisch oder konisch ausgebildet ist.

3. Vorrichtung gemäß Anspruch 1, **dadurch gekennzeichnet, daß** der untere Teil des Behandlungsraums (3) als Trockner und der obere Teil des Behandlungsraums (3) als Kristallisierer ausgebildet ist.

4. Vorrichtung gemäß Anspruch 1, **dadurch gekennzeichnet, daß** in einem Bereich 100 bis 400 mm unterhalb der Oberfläche des Polymergranulatschüttgutes Gaseintrittsstutzen (4) angebracht sind, durch die eine periodisch einwirkende Störung des Schüttgutes durch ein inertes, gasförmiges Medium erfolgt.

5. Vorrichtung gemäß Anspruch 4, **dadurch gekennzeichnet, daß** in einem Bereich 100 bis 200 mm unterhalb der Oberfläche des Polymergranulatschüttgutes Gaseintrittsstutzen (4) angebracht sind, durch die eine periodisch einwirkende Störung des Schüttgutes durch ein inertes, gasförmiges Medium erfolgt.

6. Verwendung der Vorrichtung gemäß Anspruch 1 zum Kristallisieren und Trocknen von Polyestern, insbesondere Polyethylenterephthalat.

7. Verfahren zur Kristallisation und Trocknung von Polymergranulaten, insbesondere von amorphen Polyestergranulaten, umfassend die Maßnahmen:
A) Einbringen des amorphen Polymergranulates in an sich bekannter Weise;
B) Kristallisation des Polymergranulates in an sich bekannter Weise;
C) Trocknung des kristallisierten Polymergranulates in an sich bekannter Weise;
D) Austragen des kristallisierten und getrockneten Polymergranulates in an sich bekannter Weise;
**dadurch gekennzeichnet, daß** die Kristallisation und Trocknung in einem gemeinsamen, baulich nicht getrennten Behandlungsraum erfolgt und die Agglomeratbildung während der Kristallisation durch eine periodisch einwirkende Störung des Polymergranulates in Form eines inerten gasförmigen Mediums verhindert wird, indem man das periodisch einwirkende gasförmige Medium in einem Bereich von 100 bis 500 mm unterhalb der Oberfläche des Polymergranulatschüttgutes einwirken lässt.

8. Verfahren gemäß Anspruch 7, **dadurch gekennzeichnet, daß** das inerte gasförmige Medium Luft und/oder Stickstoff ist.

9. Verfahren gemäß Anspruch 7, **dadurch gekennzeichnet, daß** die periodische Störung mit einer Frequenz von 10 bis 60 Pulsen pro Minute erfolgt.

10. Verfahren gemäß Anspruch 9, **dadurch gekennzeichnet, daß** die periodische Störung mit einer Frequenz von 20 bis 40 Pulsen pro Minute erfolgt.

11. Verfahren gemäß Anspruch 7, **dadurch gekennzeichnet, daß** die Kristallisation bei 120 bis 180°C erfolgt.

12. Verfahren gemäß Anspruch 7, **dadurch gekennzeichnet, daß** die Trocknung bei 140 bis 180°C erfolgt.

13. Verfahren gemäß Anspruch 7, **dadurch gekennzeichnet, daß** die Restfeuchte des kristallisierten und getrockneten Polymergranulates 20 ppm Wasser beträgt.

## Claims

1. An appatatus for crystallizing and drying and, if necessary, for solid-state condensation of granulated polymers from a shell with the shape of a housing (2), wherein is formed an essentially vertical treating chamber (3), having gas inlet connection pieces (4), (5) and gas outlet connection pieces (6), an inlet opening for the granulated polymer (1) which does not extend to the granulated polymer filling and an outlet opening (7) for the granulated polymer, **characterized in that** the treating chamber comprises a constructionally non-separated chamber being common for the crystallization and the drying, wherein gas inlet connection pieces (4) are provided to treat the granulated polymer bulk material in the stationary status, said gas inlet connection pieces comprising means to cause periodical disturbances of the bulk material by an inert gaseous medium, the distance between the bottom of the inlet opening (1) and the upper surface of the granulated polymer filling amounts to 200 to 1.000 mm and the distance between the bottom of the inlet opening (1) and the gas inlet connection piece (4) amounts to 300 to 1.500 mm.

2. The apparatus of claim 1, **characterized in that** the treating chamber (3) is designed so as to be cylindrical or conical.

3. The apparatus of claim 1, **characterized in that** the lower section of the treating chamber (3) is designed so as to be a drier and the upper section of the treating chamber (3) so as to be a crystallizer.

4. The apparatus of claim 1, **characterized in that** gas inlet connection pieces (4) are provided in a section about 100 to 400 mm below the surface of the granulated polymer filling, through which a periodical disturbance of the bulk material is exerted by an inert gaseous medium.

5. The apparatus of claim 4, **characterized in that** gas inlet connection pieces (4) are provided in a section about 100 to 200 mm below the surface of the granulated polymer filling, through which a periodical disturbance of the bulk material is exerted by an inert gaseous medium.

6. Use of the apparatus of claim 1 for the crystallization and drying of polyesters, in particular of poly(ethylene terephthalate).

7. A process for the crystallization and drying of granulated polymers, in particular of amorphous granulated polyesters, comprising the steps:
A) introduction of the amorphous granulated polymer in a manner generally known;
B) crystallization of the granulated polymer in a manner generally known;
C) drying of the crystallized granulated polymer in a manner generally known;
D) removal of the crystallized and dried granulated polymer in a manner generally known;
**characterized in that** the crystallization and drying is performed in a common constructionally non-separated chamber, and the formation of agglomerates in the course of crystallization is prevented by the periodical disturbance of the granulated polymer by means of an inert gaseous medium, **in that** the periodically reacting gaseous medium is allowed to react in a portion that lies 100 to 500 mm below the surface of the granulated polymer filling.

8. The process of claim 7, **characterized in that** the inert gaseous medium is air and/or nitrogen.

9. The process of claim 7, **characterized in that** the periodical disturbance is executed with a frequency of 10 to 60 pulses per minute.

10. The process of claim 9, **characterized in that** the periodical disturbance is executed with a frequency of 20 to 40 pulses per minute.

11. The process of claim 7, **characterized in that** the crystallization is performed at 120°C to 180°C.

12. The process of claim 7, **characterized in that** the drying is performed at 140°C to 180°C.

13. The process of claim 7, **characterized in that** the residual moisture of the crystallized and dried granulated polymer amounts to 20 ppm of water.

## Revendications

1. Appareil pour la cristallisation et le séchage et, le cas échéant, pour la condensation à l'état solide de polymères granulés depuis un enveloppe en forme d'un carter (2), dans lequel est formé un compartiment de traitement (3) essentiellement d'aplomb, avec des tubulures d'admission de gaz (4), (5) et des tubulures de départ de gaz (6), un orifice d'entrée pour le polymère granulé (1) qui ne va pas jusqu'au chargement du polymère granulé, et un orifice de sortie (7) pour le polymère granulé, **caractérisé en ce que** ledit compartiment de traitement comporte un compartiment non divisé en ce qui concerne sa construction pour la cristallisation et pour le séchage à la fois, où des tubulures d'admission de gaz (4) sont prévues pour le traitement en régime stationnaire du polymère granulé en vrac, qui comportent des moyens pour la provocation d'une perturbation périodique du polymère en vrac par une substance gazéiforme inerte, la distance entre le bout inférieur de l'orifice d'entrée (1) et le bord supérieur du chargement du polymère granulé fait 200 à 1000 mm et la distance entre le bout inférieur de l'orifice d'entrée (1) et la tubulure d'admission de gaz (4) fait 300 à 1500 mm.

2. Appareil d'après la revendication 1, **caractérisé en ce que** le compartiment de traitement (3) est conçu en forme de cylindre ou en forme de cône.

3. Appareil d'après la revendication 1, **caractérisé en ce que** la partie inférieure du compartiment de traitement (3) est conçu en tant que sécheur et la partie supérieur du compartiment de traitement est conçu en tant que cristallisoir.

4. Appareil d'après la revendication 1, **caractérisé en ce que**, dans une zone située 100 à 400 mm au-dessous de la surface du polymère granulé en vrac, des tubulures d'admission de gaz (4) sont prévues par lesquelles une perturbation périodique du polymèree granulé en vrac est exercée au moyen d'une substance gazéiforme inerte.

5. Appareil d'après la revendication 1, **caractérisé en ce que**, dans une zone située 100 à 200 mm au-dessous de la surface du polymère granulé en vrac, des tubulures d'admission de gaz (4) sont prévues par lesquelles une perturbation périodique du polymèree granulé en vrac est exercée au moyen d'une substance gazéiforme inerte.

6. Application de l'appareil d'après la revendication 1 pour la cristallisation et le séchage de polyesters, en particulier de polyéthylènetéréphthalate.

7. Procédé pour la cristallisation et le séchage de polymères granulés, en particulier de polyesters granulés amorphes, comportant les mesures:
A) introduire des polymères granulés amorphes comme à l'accoutumée;
B) cristalliser du polymère granulé comme à l'accoutumée;
C) sécher le polymère granulé cristallisé comme à l'accoutumée;
D) enlever le polymère granulé cristallisé et séché comme à l'accoutumée;
**caractérisé en ce que** la cristallisation et le séchage sont exécutés dans un compartiment commun non divisé en ce qui concerne sa construction et que la formation d'agglomérés pendant la cristallisation est empêchée par une perturbation périodique du polymère granulé en forme d'une substance gazéiforme et inerte en laissant agir ladite substance gazéiforme et inerte dans une zone de 100 à 500 mm au-dessous de la surface du polymère granulé en vrac.

8. Procédé d'après la revendication 7, **caractérisé en ce que** la substance gazéiforme inerte est de l'air et/ou de l'azote.

9. Procédé d'après la revendication 7, **caractérisé en ce que** la perturbation périodique est exécutée à la fréquence de 10 à 60 impulsions à la minute.

10. Procédé d'après la revendication 9, **caractérisé en ce que** la perturbation périodique est exécutée à la fréquence de 20 à 40 impulsions à la minute.

11. Procédé d'après la revendication 7, **caractérisé en ce que** la cristallisation est exécutée à la température de 120 à 180°C.

12. Procédé d'après la revendication 7, **caractérisé en ce que** le séchage est exécuté à la température de 140 à 180°C.

13. Procédé d'après la revendication 7, **caractérisé en ce que** l'humidité résiduelle du polymère granulé cristallisé et séché fait 20 ppm de l'eau.
